(19) Europäisches Patentamt / European Patent Office / Office européen des brevets

(11) **EP 2 975 390 B2**

(12) **NEW EUROPEAN PATENT SPECIFICATION**
After opposition procedure

(45) Date of publication and mention
of the opposition decision:
**01.05.2024 Bulletin 2024/18**

(45) Mention of the grant of the patent:
**13.12.2017 Bulletin 2017/50**

(21) Application number: **15176730.8**

(22) Date of filing: **14.07.2015**

(51) International Patent Classification (IPC):
*G01N 27/404* (2006.01)    *G01N 33/00* (2006.01)

(52) Cooperative Patent Classification (CPC):
**G01N 27/4045**

(54) **AMPEROMETRIC ELECTROCHEMICAL GAS SENSING APPARATUS AND METHOD FOR MEASURING OXIDISING GASES**

AMPEROMETRISCHE ELEKTROCHEMISCHE GASERFASSUNGSVORRICHTUNG UND VERFAHREN ZUR MESSUNG VON OXIDIERENDEN GASEN

APPAREIL DE DÉTECTION DE GAZ ÉLECTROCHIMIQUE AMPÉROMÉTRIQUE ET PROCÉDÉ POUR MESURER DES GAZ OXYDANTS

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **14.07.2014 GB 201412507**

(43) Date of publication of application:
**20.01.2016 Bulletin 2016/03**

(73) Proprietor: **Alphasense Limited**
**Great Notley**
**Essex CM77 7AA (GB)**

(72) Inventors:
• **SAFFELL, John**
  **Cambridge CB3 0AZ (GB)**
• **HOSSAIN, Marlene**
  **Stansted, Essex CM24 8BD (GB)**
• **BARON, Ronan**
  **Linton, Cambridgeshire CB21 4XF (GB)**

(74) Representative: **Hindles Limited**
**Clarence House**
**131-135 George Street**
**Edinburgh, EH2 4JS (GB)**

(56) References cited:
**EP-A1- 1 544 614       EP-A1- 2 412 755**

WO-A1-2006/067491    CN-A- 101 571 506
DE-A1- 19 622 931    DE-A1-102010 021 977
DE-B3- 10 330 704    GB-A- 2 436 144
US-A1- 2011 290 672

• VIRICELLE J P ET AL: "Selectivity improvement of semi-conducting gas sensors by selective filter for atmospheric pollutants detection", MATERIALS SCIENCE AND ENGINEERING C, ELSEVIER SCIENCE S.A, CH, vol. 26, no. 2-3, 1 December 2005 (2005-12-01), pages 186-195, XP025137581, ISSN: 0928-4931, DOI: 10.1016/J.MSEC.2005.10.062 [retrieved on 2006-03-01]
• ALPHASENSE: "Potentiostat circuit for D2 combined CO and H2S sensor", INTERNET CITATION, 1 March 2007 (2007-03-01), pages 1-4, XP002623285, Retrieved from the Internet: URL:www.alphasense.com [retrieved on 2007-03-01]
• WILLIAM R. PENROSE et al.: "Sensitive measurement of ozone using amperometric gas sensors", Analytica Chimica Acta, vol. 313, no. 3, 29 September 1995 (1995-09-29), pages 209-219,
• J.P . VIRICELLE et al.: "Selectivity improvement of semi-conducting gas sensors by selective filter for atmospheric pollutants detection", Materials Science and Engineering : C, vol. 26, no. 2- 3, March 2006 (2006-03), pages 186-195,

EP 2 975 390 B2

**Description**

**Field of the Invention**

The invention relates to an amperometric electrochemical gas sensing apparatus for sensing $NO_2$ and $O_3$, and a method for sensing $NO_2$ and $O_3$ using same.

**Background to the Invention**

There is a growing demand for highly accurate air quality monitoring instruments. Particular interest lies in the monitoring of the common pollutant, $NO_2$. The presence of $NO_2$ in the atmosphere can have adverse effects on human and animal health and thus it needs to be monitored and controlled. As with most common air pollutants, $NO_2$ is generally present at very low concentrations, e.g. less than 5 or 10 ppb. However, $NO_2$ is, for example, a traffic-related pollutant and, in urban areas at peak traffic times, can be present in the atmosphere at much higher concentrations. It is desirable that air monitoring instruments are able to measure $NO_2$ accurately over a wide range of concentrations, in particular from 0 ppb to about 200 ppb. Interest also lies in detecting ozone, $O_3$ which is known to affect human health. $O_3$ is a secondary product of pollution and is mainly produced in the troposphere when $NO_2$ decomposition products react with $O_2$ to give $O_3$. Background $O_3$ concentrations are usually found to be about 50 ppb in urban areas. The $O_3$ concentration can increase or, in other cases, be depleted in the occurrence of a pollution event. Indeed, a sudden drop of $O_3$ can sometimes also be an indicator of the release of other pollutants such as NO in the atmosphere as $O_3$ is a strong oxidant agent prone to react with NO for example. It is desirable that air monitoring instruments are also able to monitor ozone over a wide range of concentrations, in particular from 0 ppb to about 200 ppb. It is particularly desirable to have an air monitoring instrument that can monitor both $NO_2$ and $O_3$ over such a range of concentrations.

EP 1544514 A1 discloses a dual gas sensor having first and second working electrodes separated by a gas impermeable portion. The electrodes are preferably located on a gas permeable polymer support, with the gas impermeable portion being formed by compression of the permeable support. The sensor may include one or more filters for location adjacent the electrodes to filter certain gases from the air. The preferred sensor is able to detect carbon monoxide and hydrogen sulphide. The sensor housing is formed with four connection pins, allowing a standard sensor housing to be used for dual sensors as well as single sensors having a dummy pin.

US 2011/290672 A1 discloses an electrochemical gas sensor for detecting ozone or nitrogen dioxide in a gas sample. The gas sensor has a measuring electrode formed of carbon nanotubes or a counter electrode in an electrolyte solution, which contains lithium chloride or lithium bromide in an aqueous solution.

"Selectivity improvement of semi-conducting gas sensors by selective filter for atmospheric pollutants detection", Viricelle J P et al., Materials Science and Engineering: C, Volume 26, Issues 2-3, March 2006, Pages 186-195, discloses chemical gas sensors constituted of $SnO_2$, or phthalocyanine compounds, for detection of carbon monoxide and oxidant pollutants (such as nitrogen dioxide and ozone). Filters based on $MnO_2$ powder are disclosed as being successful at removing ozone while preserving nitrogen dioxide in a large temperature range from ambient to 400°C, but also partially converting carbon monoxide. A filter constituted of indigo powder is disclosed as being efficient at removing ozone without modification of nitrogen concentration at ambient. $MnO_2$ thick films are deposited by screen-printing on $SnO_2$, resulting in the interference of ozone for the detection of CO or $NO_2$ being reduced. For phthalocyanine devices, the indigo filter is placed upstream of the sensitive layer making the sensor selective to nitrogen dioxide.

The detection of $NO_2$ and/or $O_3$ attracts its own challenges. Generally, $NO_2$ and $O_3$ are co-present in the atmosphere at very low concentrations and, generally, both gases are reduced by the same electrode materials and at similar potentials. Further, other gases such as $SO_2$, CO, NO, $NH_3$ and $H_2$ can react at the electrodes. Thus one of the challenges of measuring $NO_2$ and/or $O_3$ accurately at low concentrations is that of dealing with interferent gases providing an electrochemical sensor response. Some embodiments address the challenge of carrying out accurate measurements of $NO_2$ in the presence of the potential interferent, NO. In addition, electrochemical cells are subject to a background drift issue which causes variability in response over time.

As interest grows in the environmental monitoring of $NO_2$ and $O_3$, there is a need for a highly accurate gas sensing electrochemical means for measuring same that lends itself to production on a smaller and lower cost scale. It would desirable for such means to be relatively simple in structure, simple to use, small in size (e.g. portable), amenable to mass production, robust, suitable for long term monitoring applications, and modest in cost.

Apart from $O_2$, the two main oxidants in the air are $NO_2$ and $O_3$. There are other oxidant gases in the ambient air such as $N_2O_5$, but their concentrations are not very significant (typically 1 ppb or less) in comparison with $NO_2$ and $O_3$.

The gas sensing apparatus and method of the invention overcome some or all of the above-identified problems.

## Summary of the Invention

According to a first aspect of the invention, there is provided an amperometric electrochemical gas sensing apparatus for sensing $NO_2$ and $O_3$ in a gas sample, the apparatus comprising: a first working electrode which is a carbon electrode and at which both $NO_2$ and $O_3$ are reducible to thereby generate a current; a second working electrode which is a carbon electrode and at which $NO_2$ is reducible to thereby generate a current; and an $O_3$ filter adjacent the second working electrode, wherein said apparatus is configured such that, in operation, the first working electrode and the $O_3$ filter are exposed to the gas sample in parallel.

In the gas sensing apparatus of the invention, the first working electrode provides a measurement of both the $NO_2$ and $O_3$ present in the sample gas, the filtered second working electrode provides a measurement of the $NO_2$ present in the sample gas and the difference between the two measurements provides a measurement of the $O_3$ present in the sample gas. The gas sensing apparatus of the invention is configured so that it can be produced in a small size, for example, in a portable form.

Typically, the gas sample is air. The gas sensing apparatus of the invention can be used to provide a measurement of the amount of $NO_2$ and/or of $O_3$, for example, in the atmosphere.

The first and second working electrodes are carbon electrodes, i.e. they contain carbon as an electrode active material. The carbon of the carbon electrode may be activated carbon, amorphous carbon, graphite, graphene (the graphene may be in functionalised form, such as COOH-functionalised), glassy (or vitreous) carbon, fullerene, carbon nanotubes (including single walled, double walled and multi-walled carbon nanotubes) or boron-doped diamond (BDD) or some other suitable allotrope of carbon. It may be that the carbon of the carbon electrodes is in the form of graphite, graphene, carbon nanotubes or glassy carbon. In one embodiment the carbon is graphite. In one embodiment, the carbon is chosen from single walled or double walled carbon nanotubes. Double walled nanotubes have been found to perform similarly to single walled nanotubes. In one embodiment, carbon is the only electrode active material in the electrode. In one embodiment, carbon is the main electrode active material in the electrode, i.e. over 50 weight %, preferably over 80 weight % of the total electrode active material present in the each of the first and second working electrodes is carbon.

In one embodiment, first and second working electrodes comprise the same type of carbon. In this embodiment, they may be the same in dimension and amount of electrode active material, so that each of the first and second working electrodes provides a similar electrochemical response to $NO_2$. Alternatively the first working electrode can be made from a different type of carbon or have a different composition of electrode active material to that of the second working electrode.

The first working electrode is an electrode at which $NO_2$ and $O_3$ are reducible. By this is meant that $NO_2$ and $O_3$ can be reduced at the electrode. Thus, in operation, any $NO_2$ or $O_3$ reaching the first working electrode of the gas sensing apparatus of the invention will react to generate a current. The second working electrode is an electrode at which $NO_2$ is reducible. $O_3$ may also be reducible at this electrode. However, as is described later, any significant amount of ozone in the sample gas is filtered out by the ozone filter. It has been found that carbon electrodes are very specific to $NO_2$ and $O_3$ and have low cross-sensitivities for other gases, i.e. $NO_2$ and $O_3$ will oxidise at the electrodes generating current reading whereas other gases such as NO and $SO_2$ will not. The use of such electrodes ensures a high level of accuracy of the measurement in the gas sensing apparatus of the invention. This is particularly important for the measurement of $NO_2$. Thus the gas sensing apparatus of the invention can be used to provide a highly accurate measurement of the amount of $NO_2$ in the atmosphere, for example in urban areas where the amount of $NO_2$ in the atmosphere is regulated by law. The ability of the gas sensing apparatus of the invention to make a highly accurate measurement of ozone (the amount of which in the atmosphere is also regulated by law) at the same time makes the apparatus a very versatile environmental monitoring instrument.

The apparatus of the invention comprises an ozone filter. The ozone filter functions to filter ozone from the sample gas before the sample gas reaches and reacts at the second working electrode. The second working electrode has a surface and the ozone filter covers that part of the surface of the second working electrode which would otherwise be exposed to the sample gas. The ozone filter is adjacent the second working electrode, i.e. it is in close proximity to the second working electrode. The ozone filter and the second working electrode can be separated by a gas permeable structure such as a gas permeable membrane.

In one embodiment, the ozone filter is effective to filter 80 vol % percent or more, or 90 vol % or more, of the ozone from a sample gas. The ozone filter may be in powder form or in any form porous enough to allow the passage of sample gas through to the second working electrode and with a high enough surface area to ensure contact with all of the ozone present in the sample gas. In one embodiment the ozone filter comprises a metal oxide such as $MnO_2$. The $MnO_2$ can be in powder form. However, where the filter material is a metal oxide and there is NO present in the sample gas, the NO may react at the filter to form $NO_2$ and thus the NO may indirectly act as an interferent at the second working electrode. In such cases, a conventional NO sensor can be used to measure the amount of NO in the sample gas and the measurement of $NO_2$ in the sample gas obtained from the gas sensing apparatus of the invention can be adjusted accordingly, i.e. so that it takes into account the amount of $NO_2$ measured at the second electrode due to the NO present in the sample gas. Thus the measurement of $NO_2$ in the sample gas taken using the gas sensing apparatus of the invention is corrected based on a measurement of NO in the sample gas taken using a NO sensor. The NO sensor can be co-located with or situated close to the gas sensing apparatus of the invention. If the NO concentration in the sample gas is less than 15 ppb then this interfereing effect can be discounted.

In an embodiment, the ozone filter comprises a mixture of a metal oxide, typically $MnO_2$, and a binder. The binder is typically particulate. The metal oxide is typically particulate (e.g. particles of $MnO_2$). The binder may comprise polytetrafluoroethylene (PTFE) particles. The binder may for example, be alumina or a silicate. The metal oxide may be less than 50%, less than 25% or less than 10% by weight of the mixture of metal oxide and binder. The mixture of metal oxide (typically $MnO_2$) and binder may comprise 0.5 to 15% by weight of the metal oxide. Preferably, the mixture of metal oxide (typically $MnO_2$) and binder comprises 3 to 10%, or 3 to 8%, by weight of the metal oxide (e.g. $MnO_2$). The metal oxide (typically $MnO_2$) may be in the form of particles with a mean diameter of 5 to 25 microns. The binder particles may have a mean diameter of 25 to 1000 microns. The binder particles may comprise PTFE particles having a mean diameter of 500 to 1000 microns. By reducing the amount of $MnO_2$, or another metal oxide, in the ozone filter we have found that NO cross-sensitivity can be reduced.

Where the ozone filter comprises a mixture of particles of a metal oxide and a particulate binder, the mixture of particles is preferably provided in a chamber which is filled with the mixture. This reduces separation of the metal oxide particles and the binder particles.

In another embodiment the ozone filter does not comprise a metal oxide, or does not comprise $MnO_2$, and can comprise carbon. The carbon can be in any suitable form, for example, it can be in form of nanostructures, e.g., carbon nanotubes. In one embodiment the ozone filter does not comprise indigo. Indigo reacts with the ozone and its efficiency as a filter thus decreases with exposure to ozone. Indigo is not suitable for use in gas sensing apparatus for the long term monitoring of $NO_2$ and $O_3$, e.g., in the atmosphere. Thus, having a filter comprising $MnO_2$ or carbon results in gas sensing apparatus with a longer lifetime.

The gas sensing apparatus of the invention is configured so that, in operation, the first working electrode is exposed to the sample gas in parallel with the ozone filter. In other words, the first working electrode and the second working electrode are effectively exposed to the sample gas at the same time, the second working electrode being exposed to the sample gas after it has passed through the ozone filter. The ozone filter is configured and positioned such that it does not cause a significant delay in the transport of the sample gas to the second working electrode. The first working electrode and the ozone filter can be described as being simultaneously in direct communication with the sample gas, i.e. the first working electrode and the ozone filter are not exposed to the sample gas in series. This can be achieved by having the first and second working electrodes positioned in close proximity or adjacent to each other. By close proximity is meant that they are both present in the same 0.5 cm$^3$ or between 1 and 5 mm apart, for example. The gas sensing apparatus of the invention can thus be small in size and compact.

The gas sensing apparatus of the invention is an amperometric electrochemical gas sensing apparatus. In such apparatus each working electrode is associated with a counter electrode, a reference electrode and an electrolyte, i.e. the working electrode is connected conductively (electrochemically) to the counter electrode and reference electrode through the electrolyte. The counter electrode, reference electrode and electrolyte can be the same or different for each working electrode. A reduction or oxidation reaction at a working electrode generates a current between it and its counter electrode. The principle of amperometry is based on the measurement of this current. The reference electrode is used to set the operating potential of the working electrode or to bias the working electrode for best performance. The gas sensing apparatus can comprise a potentiostat circuit for this purpose. The gas sensing apparatus is preferably diffusion limited, with a diffusion barrier (such as a capillary or a porous membrane) controlling access of the sample gas to the working electrodes. The combination of electrodes operating should, in principle, have sufficient activity to maintain capillary diffusion limited behaviour. In other words the electrodes must be capable of fully consuming the capillary-limited flux of the target gas reaching it.

In one embodiment, the first and second working electrodes are associated with and share a common counter electrode, a common reference electrode and a common electrolyte. In other words, the gas sensing apparatus of the first aspect of the invention further comprises one counter electrode, one reference electrode, and one body of electrolyte, with the first, second, counter and reference electrodes being in electrochemical contact with each other through said body of electrolyte. In this embodiment of the invention, a particularly compact gas sensing apparatus is achievable, due to the relatively small number of components.

In another embodiment, the first and second working electrodes do not share common counter and reference electrodes, or a common electrolyte. Each of the first and second electrodes is associated with its own counter electrode, reference electrode and electrolyte. In this embodiment the gas sensing apparatus of the first aspect of the invention further comprises a first counter electrode, a first reference electrode, a first body of electrolyte and a second counter electrode, a second reference electrode and a second body of electrolyte. In this embodiment, each of first working, counter and reference electrodes are in electrochemical contact with each other through the first body of electrolyte and each of second working, counter and reference electrodes are in electrochemical contact with each other through the second body of electrolyte. In this embodiment of the invention, the gas sensing apparatus can comprise two individual gas sensors, one of which has first working, reference and counter electrodes and a first electrolyte, the other having second working, reference and counter electrodes, a second electrolyte and an ozone filter adjacent the second working electrode. The sensors can be identical, except for the presence of the ozone filter in one of them. The sensors can be situated and coupled to each other on the same circuit board.

The reference and counter electrodes used in the gas sensing apparatus of the invention can be made of various electrode active materials which include carbon, gold, gold alloys, Pt, and Pt alloys. The platinum can be in the form of platinum oxide which includes platinum black (Ptb) and the gold can be in the form of gold oxide which includes gold black. The carbon and a carbon electrode are as described above for the first and second working electrodes. The counter electrodes can be the same or different from the reference electrodes. In one embodiment, the first, second or common reference electrode is chosen from carbon, gold, gold alloy, Pt, and Pt alloy electrodes and the first second or common counter electrode is the same as or different from the respective first, second or common reference electrode. In one embodiment, the first, second or common reference electrode is chosen from carbon, gold, gold alloy, Pt, and Pt alloy electrodes and the first second or common counter electrode is a Ptb electrode. Other combinations of reference and counter electrodes include: carbon reference electrode and platinum black counter electrode; and gold reference electrode and platinum black or gold counter electrode.

In one embodiment, each of the first and second working electrodes has an additional working electrode associated with it, the additional working electrode being incorporated in the gas sensing apparatus such that it is not exposed to the sample gas. The additional electrode is buried within the sensor body and is used to generate a signal for correcting the working electrode baseline for background signal drift due to, for example, temperature. This ability to correct the baseline signal of the working electrode for background drift means that the measurements of the gas sensing apparatus are highly accurate. This is particularly important when measuring low concentrations of $NO_2$ and $O_3$.

The additional working electrode can be made of various electrode active materials which include carbon, gold, gold alloys, Pt alloys and platinum. The platinum can be in the form of platinum oxide which includes platinum black (Ptb) and the gold can be in the form of gold oxide which includes gold black. The carbon and a carbon electrode are as described above for the first and second working electrodes. In one embodiment, the additional working electrode is a carbon electrode.

Thus in one embodiment the first and second working electrodes are associated with and share a common counter electrode, a common reference electrode, a common additional electrode for correcting baseline drift and a common electrolyte. In another embodiment the first working electrode is associated with a first counter electrode, a first reference electrode, a first additional electrode for correcting baseline drift and a first electrolyte and the second working electrode is associated with a second counter electrode, a second reference electrode, a second additional electrode for correcting baseline drift and a second electrolyte.

The electrolyte is typically a liquid electrolyte, for example, diluted $H_2SO_4$ (5M). Other standard electrolytes used in amperometric sensors include diluted $H_3PO_4$ and tetraalkyl ammonium salts dissolved in propylene carbonate. Typically, the first electrolyte, second electrolyte or a common electrolyte (as appropriate) are chosen from $H_2SO_4$. propylene carbonate and tetraethylammonium fluoride or $H_3PO_4$

The apparatus of the invention can contain control circuits that can switch or activate/deactivate the electrodes and/or a processor for processing the current signals from the electrodes to thereby determine a concentration of $NO_2$ and/or $O_3$ gas.

A second aspect of the invention relates to a method for sensing $NO_2$ and $O_3$ gas in a sample gas according to claim 12.

The current readings generated can be calibrated using means known in the art, thus providing a measurement of the concentration of $NO_2$ and $O_3$ gas in a sample gas.

The method of the invention can be used to provide an accurate indication of the amount presence of $NO_2$ and $O_3$ in a sample gas, such as air, and is particularly useful in applications where an accurate determination is essential for health and safety reasons. In particular, the method of the invention provides a very accurate indication of $NO_2$.

## Brief Description of the Figures

Figure 1 is a schematic cross-sectional view of a gas sensing apparatus of the invention according to an embodiment wherein the first and second working electrodes share a common counter electrode, reference electrode and electrolyte.

Figure 2 relates to a gas sensing apparatus of the invention according to an embodiment comprising two individual electrochemical amperometric gas sensors one housing the first working electrode and its associated counter electrode, reference electrode, electrolyte and additional working electrode, the other housing an ozone filter, the second working electrode and its associated counter electrode, reference electrode, electrolyte and additional working electrode. Figure 2 provides a schematic cross-sectional view of each of these sensors.

Figure 3 is a diagram of potentiostatic circuitry for a gas sensing apparatus in which first and second working electrodes share a common counter electrode, reference electrode and electrolyte as for example, in the embodiment of Figure 1 or in which a working electrode and an additional working electrode share a common counter electrode, reference electrode and electrolyte as for example, in one of the individual gas sensors of the embodiment of Figure 2.

Figure 4 is a graph of current generated versus time obtained using a gas sensing apparatus similar to that of Figure 2.

Figure 5 is a graph of current generated versus time obtained using a gas sensing apparatus similar to that of Figure 1.

Figures 6(A), 6(B) and 6(C) are graphs of current generated versus time obtained using a gas sensing apparatus similar to that of Figure 2.

Figure 7 is a set of two calibration curves obtained for a gas sensing apparatus similar to that of Figure 2.

Figure 8 is a graph of concentration (ppb) of $NO_2$ versus time obtained using filtered sensors similar to that illustrated in Figure 2(2).

Figure 9 contains (A) a graph of concentration (ppb) of $NO_2$ versus time and (B) a graph of concentration (ppb) of $NO_2$ plus $O_3$ obtained using unfiltered sensors similar to that illustrated in Figure 2(1) and filtered sensors similar to that illustrated in Figure 2(2).

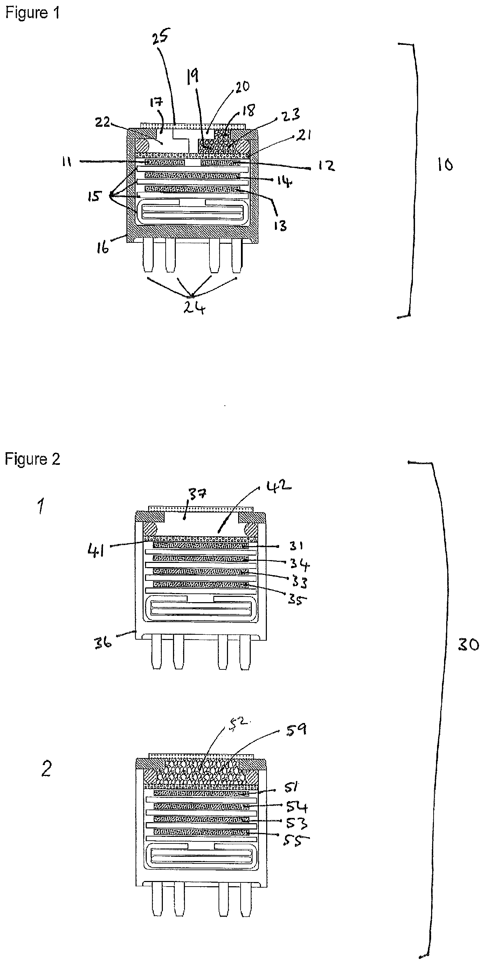

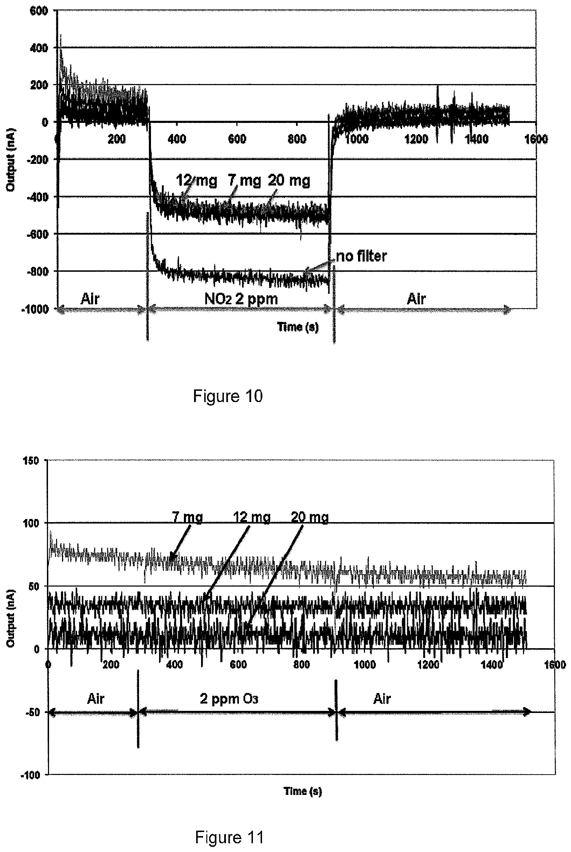

Figure 10 is a graph of current generated versus time obtained using individual amperometric gas sensors from gas sensing apparatus according to Figure 2 when exposed to air and when exposed to 2 ppm $NO_2$. The trace labelled "no filter" is the signal from the working electrode of an amperometric gas sensor according to Figure 2(1) which is not equipped with an ozone filter (0 mg $MnO_2$), i.e. a said first working electrode. The remaining three traces correspond to output from the working electrode of an amperometric gas sensor having an ozone filter (i.e. a said second working electrode), and the three traces correspond with the ozone filter having (a) 7, (b) 12 or (c) 20 mg of $MnO_2$, made up to 250mg with PTFE binder particles.

Figure 11 is a graph of the second electrode output generated versus time obtained using an electrochemical sensor from apparatus of Figure 2 when exposed to air and when exposed to 2 ppm $O_3$. Again, traces are shown for the apparatus having ozone filters with (a) 7, (b) 12 or (c) 20 mg of $MnO_2$, made up to 250mg with PTFE binder particles.

Figure 12 is a graph of current generated versus time obtained using an electrochemical sensor from gas sensing apparatus of Figure 2 when exposed to air and when exposed to 2 ppm NO. The first working electrode output corresponds to the sensor which is not equipped with an ozone filter (0 mg $MnO_2$). The second electrode output traces were generated from the sensors having ozone filters with (a) 7, (b) 12 or (c) 20 mg of $MnO_2$ made up to 250mg with PTFE binder particles.

Figure 13 is a set of three calibration curves obtained for the second working electrode when used with an ozone filter having (13A) 7 mg, (13B) 12 mg and (13C) 20 mg of $MnO_2$ made up to 250mg with PTFE binder particles.

## Detailed Description of Example Embodiments

Figure 1 is a schematic cross-sectional view of a gas sensing apparatus (10) in which the first (11) and second (12) working electrodes share a common counter electrode (13), a common reference electrode (14) and a common body or reservoir of electrolyte, mainly held in wetting filters (15).

The gas sensing apparatus comprises a housing (16) which has two inlets (17) and (18), which place the first working electrode (11) and the $O_3$ filter (19) in direct communication with the sample gas (e.g. the atmosphere) in parallel. Inlets (17) and (18) can be capillary inlets, i.e. inlets which are sized so that they control the rate of sample gas reaching the electrodes so that the gas sensing apparatus is diffusion limited, A central portion (20) divides a cavity defined by the housing (16) and a porous membrane (21) into first (22) and second (23) internal chambers. The first and second working electrodes are located in the same horizontal plane and are situated underneath the porous membrane (21).

The first working electrode (11) is situated underneath the first internal chamber (22) and the second working electrode (12) is situated underneath the second internal chamber (23). The ozone filter (19) is located in the second internal chamber (23), adjacent/on top of part of the porous membrane (21) covering the second working electrode (12). The ozone filter (19) covers the surface of the second working electrode (12) that would, absent the filter, be exposed to the sample gas. A series of circular separator discs, wicks or wetting filters (15) separate the first (11) and second (12) working electrodes from the counter electrode (13) and the reference electrode (14).

The circular separator discs, wicks or wetting filters (15) are made of a hydrophilic, non-conductive material permeable to the electrolyte which functions to transport electrolyte by capillary action. Typically the material is glass fiber. The circular separator discs, wicks or wetting filters (15) serve to ensure that each of the electrodes is in contact with the electrolyte.

The first and second working electrodes are carbon electrodes and typically comprise a catalytic layer of carbon mixed with polytetrafluoroethylene (PTFE) binder which is then bonded to a gas porous, but hydrophobic, PTFE support to allow gas support to the catalyst, i.e. the electrode active material, but avoid electrolyte leakage or flooding of the electrode. The carbon electrodes can be manufactured using common conventional technologies such as pressing, screen printing, inkjeting and spraying a carbon slurry onto a porous membrane. Here the working electrode catalyst will typically have a diameter of 19 mm. A mixture of carbon and microparticulate polytetrafluoroethylene (PTFE) is sintered and is preferably prepared by pressing the resulting mixture onto a support in the form of a gas porous membrane, such as PTFE sheet. Where carbon is pressed at the normal pressure used in the field, i.e. around 200 kg/cm$^2$, the amount of catalyst is preferably between 5 and 30 mg per cm$^2$ of electrode surface area. Preferably the binder is a Fluon matrix (Fluon is a Trade Mark) of around 0.002 ml per cm$^2$. Other electrodes used in the gas sensing apparatus of the invention, such as the Platinum black electrodes can be prepared in a similar way.

An O ring is located at the top of the porous membrane (21) and acts to seal the sensor and to aid compressing the stack of components when the sensor is sealed. Also present are a number of platinum strips that serve to connect each electrode to one of the terminal pins (24) provided at the base of the sensor. Closing housing is a dust filter (25) to prevent dust and other foreign objects from entering.

Figure 2 provides schematic cross-sectional views of two individual gas sensors, each having its own working electrode, counter electrode, reference electrode, additional electrode and electrolyte. Together, these form a gas sensing apparatus (30) according to the invention. These gas sensors have similar stacked structures.

Figure 2(1) shows a gas sensor with first working electrode (31) and its associated counter electrode (33), reference electrode (34), electrolyte and additional working electrode (35) for correcting for baseline drift. An internal chamber (42) is defined by the housing (36) and a porous membrane (41). Housing (36) has one inlet (37) which places the first working electrode (31) in direct communication with the sample gas (e.g. the atmosphere).

Figure 2(2) shows a gas sensor of similar construction except for the presence of an ozone filter (59) in the internal chamber (52) above the second working electrode (51). The second counter electrode (53), second reference electrode (54), electrolyte and second additional working electrode (55) for correcting for baseline drift are labelled on the figure.

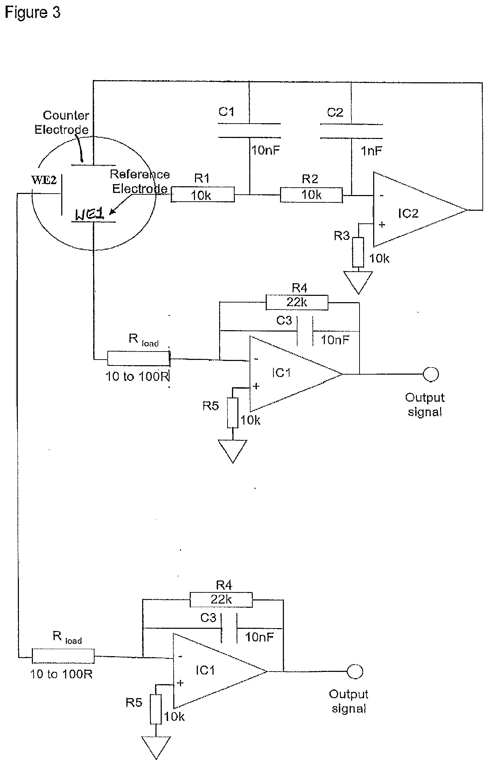

Example circuitry for the gas sensing apparatus of the invention in the embodiment of Figure 1 is shown in Figure 3, where WE1 is the first working electrode and WE2 is the second working electrode. This circuitry could also be used for either of the individual sensors making up the gas sensing apparatus of the invention in the embodiment of Figure 2, where, for example, WE1 is the first working electrode and WE2 is the first additional working electrode, or WE1 is the second working electrode and WE2 is the second additional working electrode.

**Experimental Section**

The sensors used in the following examples were tested on standard potentiostatic circuit boards (Figure 3). Generally, the sensors were stabilised for a minimum of 2 days before being tested. All the experiments involving gas tests were controlled using computer controlled valves and digital mass flow controllers. Sensor output data collection is also made using a computer. The $NO_2$ gas tests were made using a certified 100 ppm bottle (Air Products, UK) and filtered air. The ozone was obtained using a calibrated generator (Ultra-violet Products Ltd, SOG-1, Cambridge, UK). During the laboratory tests the sensors were exposed to a gas flow of 0.5 l.min$^{-1}$. In the case of Examples 6 and 7, the data collected in the field the environmental air diffuses naturally to the surface of the sensors.

The $NO_2$ chemiluminescence reference instrument used in Example 6 is an Environment Tech. instrument model 20E and the reference measurements in Example 7 were made using ThermoScientific analyser model 42I for $NO_2$ and 49I for $O_3$.

The following material was used as filter powder: $MnO_2$ powder, purchased from Aldrich, particle size 10 $\mu$m, reagent grade ($\geq$ 90%), product code 310700.

Materials used to make the electrodes include carbon graphite (particle size <20 $\mu$m, Aldrich, product code 282863), high purity single-walled carbon nanotubes, graphene (Graphene GNP COOH-functionalised, Gwent Electronic Materials Ltd), glassy carbon (Carbon, glassy, spherical powder, 2-12 micron, 99.95%, Aldrich, product code 484164).

Calibration of the sensors according to the invention was carried out as follows. The sensor output is given in nA. Amperometric gas sensors have a linear output with target gas analyte concentration. This makes possible to use a simple calibration procedure where the relation between the sensor output and the gas concentration is determined by exposing the sensor to a known concentration of gas analyte. For this application the sensitivity to both the first and the second working electrodes is determined for each of the target gases, $NO_2$ and $O_3$. The sensor output can then be used to calculate the concentration of $NO_2$ and $O_3$.

If the following parameters are defined as follows:

$i_1$ is the current observed on the first working electrode.

$I_2$ is the current observed on the second working electrode.

$S_{1(NO2)}$ is the first working electrode sensitivity to $NO_2$.

$S_{1(O3)}$ is the first working electrode sensitivity to $O_3$.

$S_{2(NO2)}$ is the second working electrode sensitivity to $NO_2$.

$S_{2(O3)}$ is the second working electrode sensitivity to $O_3$.

$C_{(NO2)}$ is the $NO_2$ analyte concentration to determine.

$C_{(O3)}$ is the $O_3$ analyte concentration to determine.

Then, by definition and taking into account the linear relationship between the sensor output and the analyte concentration, the following can be written:

$$i_1 = S_{1(NO2)} \cdot C_{(NO2)} + S_{1(O3)} \cdot C_{(O3)}$$

$$i_2 = S_{2(NO2)} \cdot C_{(NO2)} + S_{2(O3)} \cdot C_{(O3)}$$

The ozone filter on top of the second working electrode means that $S_{2(O3)} = 0$. So $C_{(NO2)}$ can be calculated using the simple relation:

$$C_{(NO2)} = i_2 / S_{2(NO2)}$$

The $NO_2$ analyte concentration being now known it is then possible to calculate the $O_3$ analyte concentration using the first working electrode output:

$$C_{(O3)} = (i_1 - S_{1(NO2)} \cdot C_{(NO2)}) / S_{1(O3)}$$

or

$$C_{(O3)} = (i_1 - S_{1(NO2)} \cdot (i_2 / S_{2(NO2)})) / S_{1(O3)}$$

**Example 1**

In this example, eight unfiltered sensors similar to those illustrated in Figure 2(1) were used. These sensors are commercially available under the trade name NO2-B4, manufactured and sold by Alphasense. For these sensors the first working electrode, the second working electrode, the additional electrode and the reference electrode are made of carbon graphite and the counter electrode is made of platinum black. Each of these sensors was exposed to each of NO, $SO_2$, CO, $H_2$, $CO_2$ and $NH_3$, at the concentration specified in Table 1 below, for 10 minutes. These gases are the most common possible interferents in the air. In this experiment, the cross sensitivity values for the sensors are determined (the values given in % relative to the signal obtained for $NO_2$). The results are listed in Table 1.

Table 1

| Gas | NO | $SO_2$ | CO | $H_2$ | $CO_2$ | $NH_3$ |
|---|---|---|---|---|---|---|
| Gas concentration (ppm) | 5 | 5 | 5 | 100 | 50000 | 20 |
| Cross-sensitivity (%) | -4 | -3 | -0.1 | 0.1 | 0.1 | -0.1 |

The set of data obtained shows that the unfiltered sensors are highly specific to $NO_2$ and $O_3$. Hence in a complex environment where these different gases are present, the unfiltered sensor will give an output representative of the sum of the concentration of $NO_2$ and $O_3$.

**Example 2**

In this example, a sensor according to the embodiment illustrated in Figure 2 was tested. Specifically, the ozone filtering capacity of the ozone filter ($MnO_2$ powder) was tested. Two identical $NO_2$ electrochemical gas sensors were used in this experiment. These sensors are commercially available under the trade name NO2-B4, manufactured and sold by Alphasense. In each sensor, the working electrode, additional electrode and reference electrode was made of carbon graphite and the counter electrode was made of Ptb (platinum black). In one of the sensors, 500 mg of $MnO_2$ powder was placed above the working electrode to act as an ozone filter.

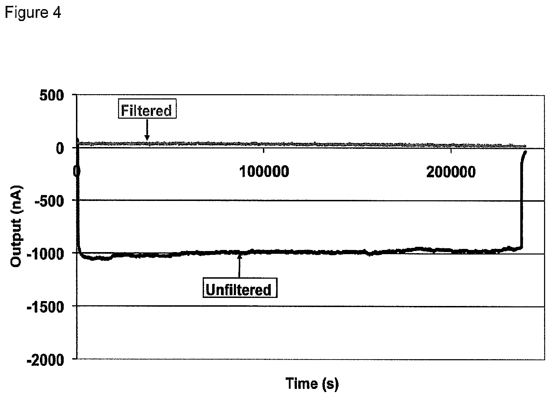

The sensors were exposed to a relatively high concentration of $O_3$ (2 ppm), compared to environmental concentrations, for an extended time (65 hours). The results are shown in Figure 4. Figure 4 demonstrates that the $MnO_2$ powder has a very good filter capacity with respect to $O_3$. The experiment shows that the $MnO_2$ filter powder retains its full filtering capacity for the full duration of the experiment.

**Example 3**

In Example 3, gas sensing apparatus according to the embodiment illustrated in Figure 1 was tested. The first electrode and the second working electrode share the same counter electrode and reference electrode. The first and second working electrodes, the additional electrode and the reference electrode are made of carbon graphite and the counter electrode is made of Ptb. $MnO_2$ powder (150 mg) is used in the internal chamber above the second working electrode. $MnO_2$ powder (150 mg) is used as the ozone filter material.

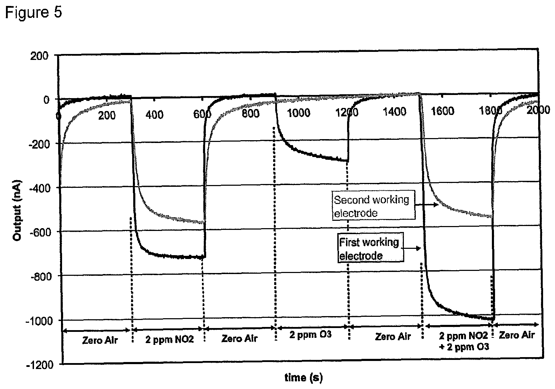

In this example, the gas sensing apparatus was exposed to zero air, then it was exposed to 2 ppm $NO_2$, then to 2 ppm $O_3$, and then to a mixture of 2 ppm $NO_2$ and 2 ppm $O_3$, in successive steps. Zero air is air that has been filtered to remove most gases ($NO_2$, NO, CO, $SO_2$, $O_3$, etc.) and is used as a calibrating gas for zero concentration. The results of the output from the gas sensing apparatus are shown in Figure 5. The experimental data obtained show that both electrodes respond to $NO_2$, hence the $MnO_2$ filter powder used does not stop $NO_2$. However it can also be observed that the second working electrode does not respond to $O_3$ which demonstrates that the $MnO_2$ efficiently filters $O_3$. The response obtained when the apparatus is exposed to both target gases demonstrates that the first working electrode output corresponds to both $NO_2$ and $O_3$ and that the second working electrode responds selectively to $NO_2$.

**Example 4**

In Example 4, three gas sensing apparatus, (A), (B) and (C), according to the embodiment illustrated in Figure 2 were tested. In each case, the gas sensing apparatus comprised a pair of identical electrochemical gas sensors, except that one contained an ozone filter. In (A), the first pair of sensors, the working electrodes and additional electrode are made of graphene; in (B), the second pair of sensors, the working electrodes and additional electrode are made of single walled carbon nanotubes (SWCNTs); in (C), the third pair of sensors, the working electrodes and additional electrode are made of glassy carbon. For each of (A), (B) and (C), the counter and reference electrodes were made of Ptb and $MnO_2$ powder (500 mg) was used as the ozone filter material.

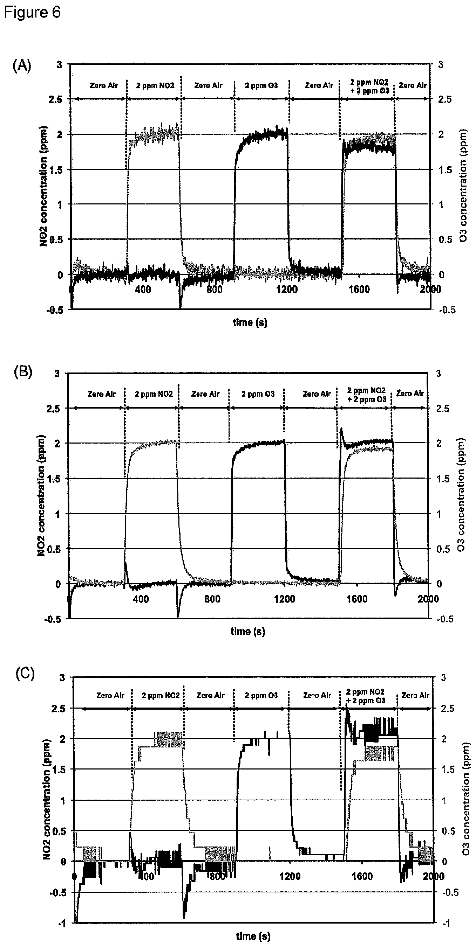

In this example, $NO_2$ and $O_3$ concentration profiles were obtained by processing the first (unfiltered) and second electrode output (filtered) when exposed to clean air, 2 ppm $NO_2$, 2 ppm $O_3$, and a mixture of 2 ppm $NO_2$ and 2 ppm $O_3$, successively. The results are shown in Figure 6 and they demonstrate that various types of carbon working electrodes can be used to make the gas sensing apparatus of the invention. The sensor output was processed using the sensors respective sensitivity to both $NO_2$ and $O_3$ as specified in the calibration procedure described above. Concentration profiles for both $NO_2$ and $O_3$ were obtained. Figure 6 indicates that the concentration of both $NO_2$ and $O_3$ can be measured when the gas sensing apparatus of the invention is in the presence of a mixture of the two gases.

**Example 5**

In Example 5, gas sensing apparatus according to the embodiment illustrated in Figure 2 was tested. Two identical $NO_2$ electrochemical gas sensors were used in this experiment. These sensors are commercially available under the trade name NO2-B4, manufactured and sold by Alphasense. In one of the sensors, $MnO_2$ powder (500 mg) was placed above the working electrode to act as an ozone filter. Thus the gas sensing apparatus comprised a pair of sensors, one of which has no filter and one of which has a filter. The working electrodes, additional electrode and reference electrode are made of carbon graphite, the counter electrode is made of Ptb.

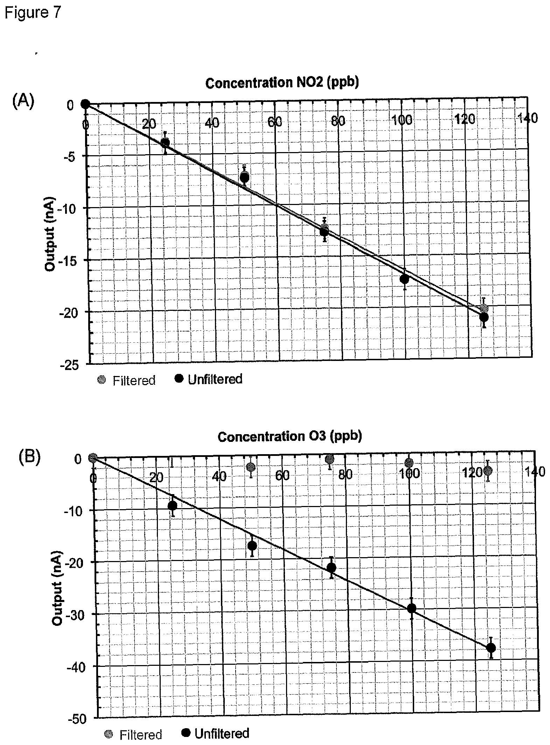

Calibration curves for the filtered and unfiltered sensors were obtained (A) when the sensors were exposed to various concentrations of $NO_2$ in the range 0 to 125 ppb, and (B) when the sensors were exposed to various concentrations of $O_3$ in the range 0 to 125 ppb. The sensors were exposed to each of the gases for 10 minutes. The results are reported in Figure 7. This figure shows that the sensor output is linear with the $NO_2$ analyte gas concentration for both the first (unfiltered) and second (filtered) electrodes (Figure 7(A)). Moreover, the unfiltered sensor output is linear with the $O_3$ analyte gas concentration whereas the filtered sensor is unsensitive to $O_3$ (Figure 7(B)). The confidence interval both for the determination of $NO_2$ and $O_3$ concentration was found to be as low as $\pm 5$ ppb in the described experimental conditions.

**Example 6**

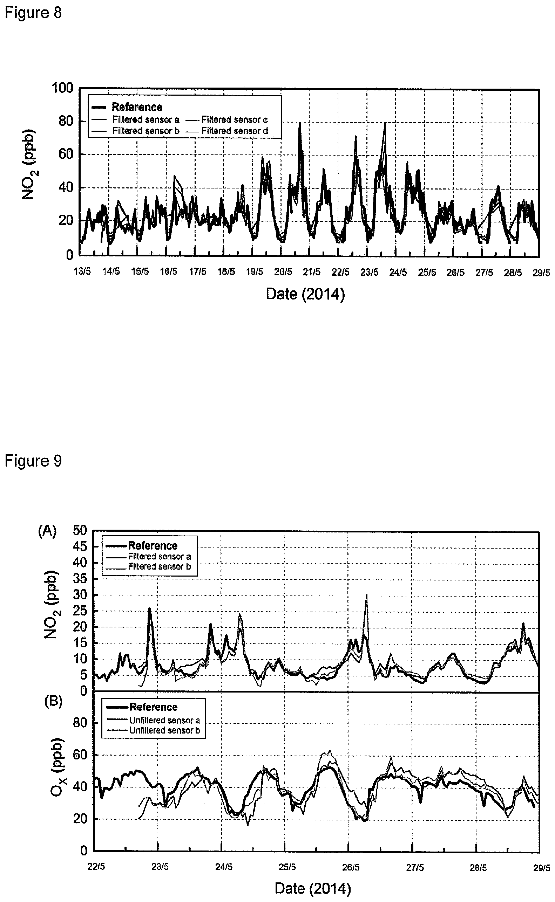

In this example, four filtered sensors similar to those illustrated in Figure 2(2) were co-located with a reference chemiluminescence instrument at Gonville Place, Cambridge. For these sensors the working electrode, additional electrode and reference electrode were made of carbon graphite, the counter electrode was made of Ptb. $MnO_2$ powder (500 mg) was used as the filter material. These sensors were exposed to the atmosphere and an hourly averaged time series of their calibrated along with that of the reference chemiluminescence instrument is shown in Figure 8.

**Example 7**

In Example 7, two gas sensing apparatus according to the embodiment illustrated in Figure 2 were tested. In each case the gas sensing apparatus comprised two identical $NO_2$ electrochemical gas sensors, except that one of which had an ozone filter. These sensors are commercially available under the trade name NO2-B4, manufactured and sold by Alphasense. In one of the sensors, $MnO_2$ powder (500 mg) was placed above the working electrode to act as an ozone filter. Thus four sensors were tested, two with no filters and two with filters. The working electrodes, additional electrode and reference electrode are made of carbon graphite, the counter electrode is made of Ptb.

In this example, the two pairs of sensors (two filtered and two unfiltered) were co-located with a reference chemiluminescence instrument at the Chemistry Department, University of Cambridge. These sensors were exposed to the atmosphere and their calibrated output along with that of the reference chemiluminescence instrument versus time is shown in Figures 9(A) and (B). Figure 9(A) shows $NO_2$ measurements for the filtered sensors and for the reference instrument. Figure 10(B) shows $O_X = (NO_2 + O_3)$ measurements for unfiltered sensors and for the reference instrument.

The graphs of Figures 8 and 9 show that the gas sensing apparatus of the invention can be used efficiently in the field to monitor air quality. From these it can be seen that the amperometric sensors readings match very closely the chemiluminescence reference instruments readings both for $NO_2$ (Figure 8 and Figure 9(A)) and for $NO_2 + O_3$ (Figure 9(B)). Furthermore, Figure 8 and Figure 9 demonstrate that the sensors are adequate for sensing the two target analytes in the low ppb range (0-100 ppb).

**Example 8**

We have found that using a lower amount of $MnO_2$ filter powder reduces the cross-sensitivity to NO. In Example 8, individual gas sensors for the gas sensing apparatus according to the embodiment illustrated in Figure 2 were tested subsequently with $NO_2$, $O_3$ and NO gases. Gas sensors according to Figure 2(2) (i.e. including an ozone filter and a said second working electrode) were made but in which the ozone filters had (a) 7, (b) 12 and (c) 20 mg of $MnO_2$ mixed with PTFE binder (Fluon PTFE G307 (median particle size 650 $\mu$m) (Fluon is a trade mark)) to make up 250mg in total. Accordingly, in variants (a), (b) and (c) the ozone filter had about 3%, 5% and 8% of $MnO_2$ by weight. A reference gas sensor had no filter present (neither $MnO_2$ nor PTFE binder) and so corresponded with the sensor of Figure 2(1) (i.e. including no ozone filter within the housing and having a first working electrode).

It was found that the working electrodes respond to $NO_2$ gas for all the sensors (Figure 10). The apparently greater response in the sensor with no filter was due only to diffusion effects. It was found that all the filters tested were also effective ozone filters and Figure 11 shows no change in output signal when ozone is present.

It was found that exposure to NO results in a cross-sensitivity (given in % relative to the signal obtained for

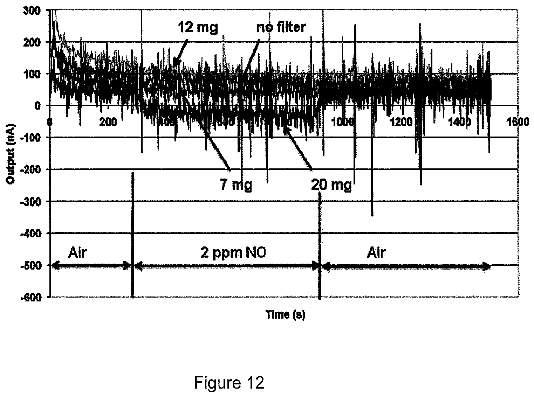

NO$_2$) of less than 4% on first electrode and a cross-sensitivity which vary with the MnO$_2$ content on the second working electrode (Figure 12).

The following table (Table 2) shows cross-sensitivity to NO for three filtered sensors with different amounts of MnO$_2$ in the filter material. The numerical values are the strength of the signal in the presence of 2ppm NO as a percentage of the signal obtained in the presence of the same concentration of NO$_2$.

| Amount of MnO$_2$ (mg) | 0 | 7 | 12 | 20 |
|---|---|---|---|---|
| Sensor 1 | 1.49 | 6.93 | 10.77 | 12.89 |
| Sensor 2 | 2.30 | 4.64 | 6.67 | 13.10 |
| Sensor 3 | 1.95 | 6.15 | 7.57 | 14.17 |
| Mean | 1.43 | 5.91 | 8.33 | 13.38 |
| | | | | |

Again, the MnO$_2$ was made up to 250mg with PTFE binder and the zero MnO$_2$ column has no filter.

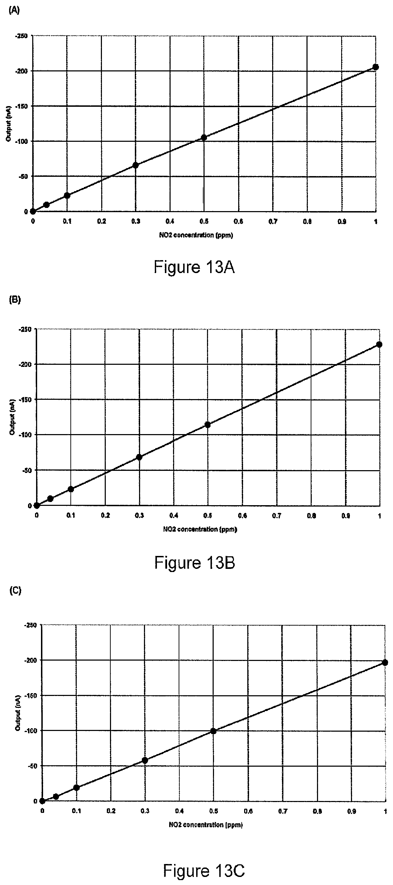

Figure 13 shows that the three variants of the ozone filters tested, that is with (a) 7, (b) 12 and (c) 20 mg of MnO$_2$ made up to 250mg with PTFE binder, show a linear relationship with the NO$_2$ concentration. Accordingly, apparatus was provided which is suitable for the measurement of NO$_2$ in the presence of O$_3$ but with reduced cross-sensitivity to NO.

[0072]    It was found to be preferable for the amount of PTFE microparticles to be sufficient to fill the internal chamber (42) of the sensor. If the internal chamber was only partially filled with a filter powder, there would be a risk that the powder could move when the sensor is moved, possibly opening a pathway for the gas directly to the electrode without passing through the filter material. PTFE microparticles have the advantage of easily becoming coated with the MnO$_2$ microparticles and the mixing results in a well homogeneous PTFE microparticles/MnO$_2$ microparticles filter material.

**Claims**

1.   Amperometric electrochemical gas sensing apparatus (10) for sensing NO$_2$ and O$_3$ in a sample gas, the apparatus comprising:

    a first working electrode (11) which is a carbon electrode and at which both NO$_2$ and O$_3$ are reducible to thereby generate a current;
    a second working electrode (12) which is a carbon electrode and at which both NO$_2$ and O$_3$ are reducible to thereby generate a current; and an O$_3$ filter (19) covering the surface of the second working electrode (12) which would otherwise be exposed to the sample gas, but the O$_3$ filter (19) not covering the surface of the first working electrode (11) which is exposed to the sample gas,

    wherein said apparatus (10) is configured such that, in operation, the first working electrode (11) and the O$_3$ filter (19) are simultaneously in direct communication with the sample gas.

2.   Amperometric electrochemical gas sensing apparatus according to claim 1 wherein the O$_3$ filter (19) comprises MnO$_2$ or carbon.

3.   Amperometric electrochemical gas sensing apparatus according to claim 1 or claim 2 wherein the O$_3$ filter (19) comprises a mixture of a metal oxide and a binder.

4.   Amperometric electrochemical gas sensing apparatus according to claim 3 wherein the O$_3$ filter (19) comprises a mixture of MnO$_2$ and a particulate binder.

5.   Amperometric electrochemical gas sensing apparatus according to claim 4 wherein the particulate binder is poly-tetrafluoroethylene and the MnO$_2$ is 3 to 10% by weight of the mixture.

6.   Amperometric electrochemical gas sensing apparatus according to any one preceding claim, wherein the O$_3$ filter (19) comprises a mixture of particles of a metal oxide and a particulate binder, the mixture being provided in a chamber (23) which is filled with the mixture.

7. Amperometric electrochemical gas sensing apparatus according to any one of the preceding claims wherein the carbon of the carbon electrodes (11, 12) is in the form of activated carbon, amorphous carbon, graphite, fullerene, graphene, glassy carbon, carbon nanotubes, or boron-doped diamond.

8. Amperometric electrochemical gas sensing apparatus according to any one of the preceding claims wherein the first working electrode (31) is associated with a first counter electrode (33), a first reference electrode (34) and a first electrolyte, and the second working electrode (51) is associated with a second counter electrode (54), a second reference electrode (55) and a second electrolyte.

9. Amperometric electrochemical gas sensing apparatus according to any one of claims 1 to 7 wherein the first and second working electrodes are associated with a common counter electrode (13), a common reference electrode (14) and a common electrolyte.

10. Amperometric electrochemical gas sensing apparatus according to any one of the preceding claims wherein each of the first and second working electrodes (31, 51) has an additional working electrode (35, 55) associated with it, the additional working electrode being situated in the apparatus such that it is not exposed to the sample gas.

11. Amperometric electrochemical gas sensing apparatus according to claim 8 and claim 10 comprising first and second additional working electrodes (33, 55), associated with the first and second working electrodes (31, 51), respectively.

12. A method for sensing $NO_2$ and $O_3$ gas in a sample gas comprising: exposing a sample gas to a first working electrode (11) and simultaneously to an $O_3$ filter (19) covering the surface of a second working electrode (12) which would otherwise be exposed to the sample gas, but the $O_3$ filter (19) not covering the surface of the first working electrode (11) which is exposed to the sample gas, wherein the first working electrode (11) is a carbon electrode at which both $NO_2$ and $O_3$ are reducible to thereby generate a current, the second working electrode (12) is a carbon electrode at which both $NO_2$ and $O_3$ are reducible to thereby generate a current, and determining the presence of $NO_2$ and $O_3$ in said sample gas by a reading of the currents generated by the first and second working electrodes (11, 12), respectively, the first working electrode (11) and the $O_3$ filter (19) being simultaneously in direct communication with the sample gas.

**Patentansprüche**

1. Amperometrische elektrochemische Gaserfassungsvorrichtung (10) zum Erfassen von $NO_2$ und $O_3$ in einem Probengas, wobei die Vorrichtung Folgendes umfasst:

eine erste Arbeitselektrode (11), die eine Kohlenstoffelektrode ist und an der sowohl $NO_2$ als auch $O_3$ reduzierbar sind, um dadurch einen Strom zu erzeugen,
eine zweite Arbeitselektrode (12), die eine Kohlenstoffelektrode ist und an der sowohl $NO_2$ als auch $O_3$ reduzierbar sind, um dadurch einen Strom zu erzeugen, und
einen $O_3$-Filter (19), der die Oberfläche der zweiten Arbeitselektrode (12) bedeckt, die andernfalls dem Probengas ausgesetzt wäre, jedoch nicht die Oberfläche der ersten Arbeitselektrode (11) bedeckt, die dem Probengas ausgesetzt ist,
wobei die Vorrichtung (10) so ausgelegt ist, dass beim Betrieb die erste Arbeitselektrode (11) und der $O_3$-Filter (19) gleichzeitig in direkter Kommunikation mit dem Probengas stehen.

2. Amperometrische elektrochemische Gaserfassungsvorrichtung nach Anspruch 1, wobei der $O_3$-Filter (19) $MnO_2$ oder Kohlenstoff umfasst.

3. Amperometrische elektrochemische Gaserfassungsvorrichtung nach Anspruch 1 oder Anspruch 2, wobei der $O_3$-Filter (19) eine Mischung aus einem Metalloxid und einem Bindemittel umfasst.

4. Amperometrische elektrochemische Gaserfassungsvorrichtung nach Anspruch 3, wobei der $O_3$-Filter (19) eine Mischung von $MnO_2$ und einem teilchenförmigen Bindemittel umfasst.

5. Amperometrische elektrochemische Gaserfassungsvorrichtung nach Anspruch 4, wobei das teilchenförmige Bindemittel Polytetrafluorethylen ist und das $MnO_2$ 3 bis 10 Gew.-% der Mischung ausmacht.

**6.** Amperometrische elektrochemische Gaserfassungsvorrichtung nach einem der vorhergehenden Ansprüche, wobei der $O_3$-Filter (19) eine Mischung von Teilchen eines Metalloxids und eines teilchenförmigen Bindemittels umfasst, wobei die Mischung in einer Kammer (23) bereitgestellt ist, die mit der Mischung gefüllt ist.

**7.** Amperometrische elektrochemische Gaserfassungsvorrichtung nach einem der vorhergehenden Ansprüche, wobei der Kohlenstoff von Kohlenstoffelektroden (11, 12) in Form aktivierten Kohlenstoffs, amorphen Kohlenstoffs, Graphits, eines Fullerens, eines Graphens, glasartigen Kohlenstoffs, Kohlenstoffnanoröhrchen oder bordotierten Diamants vorliegt.

**8.** Amperometrische elektrochemische Gaserfassungsvorrichtung nach einem der vorhergehenden Ansprüche, wobei die erste Arbeitselektrode (31) mit einer ersten Gegenelektrode (33), einer ersten Referenzelektrode (34) und einem ersten Elektrolyt assoziiert ist und die zweite Arbeitselektrode (51) mit einer zweiten Gegenelektrode (54), einer zweiten Referenzelektrode (55) und einem zweiten Elektrolyt assoziiert ist.

**9.** Amperometrische elektrochemische Gaserfassungsvorrichtung nach einem der Ansprüche 1 bis 7, wobei die erste und die zweite Arbeitselektrode mit einer gemeinsamen Gegenelektrode (13), einer gemeinsamen Referenzelektrode (14) und einem gemeinsamen Elektrolyt assoziiert sind.

**10.** Amperometrische elektrochemische Gaserfassungsvorrichtung nach einem der vorhergehenden Ansprüche, wobei sowohl die erste als auch die zweite Arbeitselektrode (31, 51) eine zusätzliche Arbeitselektrode (35, 55) aufweisen, die damit assoziiert ist, wobei sich die zusätzliche Arbeitselektrode in der Vorrichtung befindet, so dass sie dem Probengas nicht ausgesetzt ist.

**11.** Amperometrische elektrochemische Gaserfassungsvorrichtung nach Anspruch 8 und Anspruch 10, welche eine erste und eine zweite zusätzliche Arbeitselektrode (33, 55) aufweist, die mit der ersten bzw. der zweiten Arbeitselektrode (31, 51) assoziiert sind.

**12.** Verfahren zur Erfassung von $NO_2$- und $O_3$-Gas in einem Probengas, welches Folgendes umfasst:
Aussetzen eines Probengases einer ersten Arbeitselektrode (11) und gleichzeitig einem $O_3$-Filter (19), der die Oberfläche der zweiten Arbeitselektrode (12) bedeckt, die andernfalls dem Probengas ausgesetzt wäre, jedoch nicht die Oberfläche der ersten Arbeitselektrode (11) bedeckt, die dem Probengas ausgesetzt ist, wobei die erste Arbeitselektrode (11) eine Kohlenstoffelektrode ist, an der sowohl $NO_2$ als auch $O_3$ reduzierbar sind, um dadurch einen Strom zu erzeugen, die zweite Arbeitselektrode (12) eine Kohlenstoffelektrode ist, an der sowohl $NO_2$ als auch $O_3$ reduzierbar sind, um dadurch einen Strom zu erzeugen, und Feststellen des Vorhandenseins von $NO_2$ und $O_3$ im Probengas durch eine Ablesung der von der ersten bzw. der zweiten Arbeitselektrode (11, 12) erzeugten Ströme, wobei die erste Arbeitselektrode (11) und der $O_3$-Filter (19) gleichzeitig in direkter Kombination mit dem Probengas stehen.

**Revendications**

**1.** Appareil électrochimique ampérométrique de détection de gaz (10) pour la détection de $NO_2$ et d'$O_3$ dans un échantillon gazeux, l'appareil comprenant :

une première électrode de travail (11) qui est une électrode en carbone et au niveau de laquelle $NO_2$ et $O_3$ sont tous deux réductibles pour de cette manière générer un courant ;
une seconde électrode de travail (12) qui est une électrode en carbone et au niveau de laquelle $NO_2$ et $O_3$ sont tous deux réductibles pour de cette manière générer un courant ; et
un filtre à $O_3$ (19) recouvrant la surface de la seconde électrode de travail (12) qui serait sinon exposée à l'échantillon gazeux, mais le filtre à $O_3$ (19) ne recouvrant pas la surface de la première électrode de travail (11) qui est exposée à l'échantillon gazeux, ledit appareil (10) étant conçu de façon telle que, en fonctionnement, la première électrode de travail (11) et le filtre à $O_3$ (19) soient simultanément en communication directe avec l'échantillon gazeux.

**2.** Appareil électrochimique ampérométrique de détection de gaz selon la revendication 1 dans lequel le filtre à $O_3$ (19) comprend du $MnO_2$ ou du carbone.

**3.** Appareil électrochimique ampérométrique de détection de gaz selon la revendication 1 ou la revendication 2 dans lequel le filtre à $O_3$ (19) comprend un mélange d'un oxyde métallique et d'un liant.

4. Appareil électrochimique ampérométrique de détection de gaz selon la revendication 3 dans lequel le filtre à $O_3$ (19) comprend un mélange de $MnO_2$ et d'un liant particulaire.

5. Appareil électrochimique ampérométrique de détection de gaz selon la revendication 4 dans lequel le liant particulaire est du polytétrafluoroéthylène et le $MnO_2$ représente 3 à 10 % en poids du mélange.

6. Appareil électrochimique ampérométrique de détection de gaz selon une quelconque revendication précédente, dans lequel le filtre à $O_3$ (19) comprend un mélange de particules d'un oxyde métallique et d'un liant particulaire, le mélange étant fourni dans une chambre (23) qui est remplie avec le mélange.

7. Appareil électrochimique ampérométrique de détection de gaz selon l'une quelconque des revendications précédentes dans lequel le carbone des électrodes en carbone (11, 12) est sous la forme de carbone activé, de carbone amorphe, de graphite, de fullerène, de graphène, de carbone vitreux, de nanotubes de carbone ou de diamant dopé au bore.

8. Appareil électrochimique ampérométrique de détection de gaz selon l'une quelconque des revendications précédentes dans lequel la première électrode de travail (31) est associée à une première contre-électrode (33), une première électrode de référence (34) et un premier électrolyte, et la seconde électrode de travail (51) est connectée à une seconde contre-électrode (54), une seconde électrode de référence (55) et un second électrolyte.

9. Appareil électrochimique ampérométrique de détection de gaz selon l'une quelconque des revendications 1 à 7 dans lequel les première et seconde électrodes de travail sont associées à une contre-électrode commune (13), une électrode de référence commune (14) et un électrolyte commun.

10. Appareil électrochimique ampérométrique de détection de gaz selon l'une quelconque des revendications précédentes dans lequel chacune des première et seconde électrodes de travail (31, 51) a une électrode de travail supplémentaire (35, 55) associée à celle-ci, l'électrode de travail supplémentaire étant située dans l'appareil de façon telle qu'elle ne soit pas exposée à l'échantillon gazeux.

11. Appareil électrochimique ampérométrique de détection de gaz selon la revendication 8 et la revendication 10 comprenant des première et seconde électrodes de travail supplémentaires (33, 55), associées respectivement aux première et seconde électrodes de travail (31, 51).

12. Procédé pour la détection de gaz de $NO_2$ et $O_3$ dans un échantillon gazeux comprenant :

l'exposition d'un échantillon gazeux à une première électrode de travail (11) et simultanément à un filtre à $O_3$ (19) recouvrant la surface d'une seconde électrode de travail (12) qui serait sinon exposée à l'échantillon gazeux, mais le filtre à $O_3$ (19) ne recouvrant pas la surface de la première électrode de travail (11) qui est exposée à l'échantillon gazeux, la première électrode de travail (11) étant une électrode en carbone au niveau de laquelle $NO_2$ et $O_3$ sont tous deux réductibles pour de cette manière générer un courant, la seconde électrode de travail (12) étant une électrode en carbone au niveau de laquelle $NO_2$ et $O_3$ sont tous deux réductibles pour de cette manière générer un courant, et
la détermination de la présence de $NO_2$ et $O_3$ dans ledit échantillon gazeux par une lecture des courants générés par les première et seconde électrodes de travail (11, 12), respectivement, la première électrode de travail (11) et le filtre à $O_3$ (19) étant simultanément en communication directe avec l'échantillon gazeux.

Figure 1

Figure 2

Figure 3

Figure 4

EP 2 975 390 B2
EP 2 975 390 B2

Figure 5

Figure 6

Figure 7

(A) Concentration NO2 (ppb)

(B) Concentration O3 (ppb)

Figure 8

Figure 9

Figure 10

Figure 11

Figure 12

(A)

Figure 13A

(B)

Figure 13B

(C)

Figure 13C

**EP 2 975 390 B2**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- EP 1544514 A1

- US 2011290672 A1

**Non-patent literature cited in the description**

- **VIRICELLE J P et al.** Selectivity improvement of semi-conducting gas sensors by selective filter for atmospheric pollutants detection. *Materials Science and Engineering: C,* March 2006, vol. 26 (2-3), 186-195